## Europäisches Patentamt
## European Patent Office
## Office européen des brevets

(11) Numéro de publication: **0 078 196**
**B1**

(12) **FASCICULE DE BREVET EUROPÉEN**

(45) Date de publication du fascicule du brevet:
**08.04.87**

(51) Int. Cl.⁴: **G 02 B 6/38**

(21) Numéro de dépôt: **82401901.2**

(22) Date de dépôt: **15.10.82**

(54) **Dispositif de préparation en nappe des extrémités de fibres optiques reparties autour d'une structure à symétrie axiale.**

(30) Priorité: **27.10.81 FR 8120171**

(43) Date de publication de la demande:
**04.05.83 Bulletin 83/18**

(45) Mention de la délivrance du brevet:
**08.04.87 Bulletin 87/15**

(84) Etats contractants désignés:
**BE CH DE GB IT LI NL SE**

(56) Documents cité:
**EP-A-0 008 980**
**EP-A-0 019 026**
**EP-A-0 044 020**
**DE-A-2 505 027**

(73) Titulaire: **SOCIETE ANONYME DE TELECOMMUNICATIONS, 41, rue Cantagrel, F-75624 Paris Cedex 13 (FR)**
Titulaire: **SOCIETE INDUSTRIELLE DE LIAISONS ELECTRIQUES - SILEC, 64bis, rue de Monceau, F-75008 Paris (FR)**

(72) Inventeur: **Delebecque, Robert Paul, 156 bis, rue d'Aulnay, F-92290 Chatenay Malabry (FR)**

(74) Mandataire: **Martinet & Lapoux, 62, rue des Mathurins, F-75008 Paris (FR)**

LIBER, STOCKHOLM 1987

## Description

La présente invention concerne un dispositif de préparation en nappe des extrémites de fibres optiques réparties autour d'une structure à symétrie axiale. Le dispositif est particulièrement destiné à positionner parallèlement sur un plan les extrémités de fibres optiques qui sont équiréparties à la périphérie d'un jonc rainuré d'un câble cylindrique qui a été dégainé en vue de son raccordement à un autre câble. Le dispositif comprend un répartiteur monobloc dans lequel sont ménagées des ouvertures propres à être traversées respectivement par les extrémités de fibres sortant de ladite structure.

Un tel répartiteur est décrit dans la demande de brevet européen EP-A-0 044 020 déposée le 7 juillet 1981 (avec revendication d'une priorité du 14 juillet 1980) et publiée le 20 janvier 1982, et ainsi appartenant à l'élat de la technique selon l'article 54 (3) de la C.B.E. Ce répartiteur est constitué par un long cylindre plein monobloc dans lequel ont été pratiquées par moulage des ouvertures sous la forme de petits conduits s'étendant longitudinalement. Les conduits ont un diamètre sensiblement égal à celui des fibres. Au niveau de l'une des bases du cylindre-répartiteur disposée en regard d'une extrémité de la structure, Celle qu'un câble à fibres optiques, les conduits ont des premières extrémités réparties comme les fibres optiques dans la structure, par exemple circulairement, par lesquelles les extrémités des fibres pénètrent. Au niveau de l'autre base du cylindre-répartiteur, les conduits ont des secondes extrémités alignées le long d'un axe d'alignement diamètral au répartiteur, à partir desquelles sortent les extrémités des fibres étalées en nappe.

L'utilisation du cylindre-répartiteur selon la EP-A-0 044 020 dans un boîtier de raccordement de deux câbles à fibres optiques dans lequel un support plan rainuré ou autre moyen équivalent est prévu pour abouter coplanairement les fibres deux à deux présente essentiellement les inconvénients suivants. Un premier inconvénient consiste à prévoir deux logements adéquats dans le boîtier de raccordement pour recevoir respectivement les cylindres-répartiteurs prolongeant les extrémités des câbles à raccorder. Corrolairement, l'encombrement du boîtier est plus important et le coût du raccordement est augmenté par la fabrication des deux répartiteurs. Un second inconvénient consiste en la difficulté d'enfiler manuellement les fibres optiques directement dans les conduits ayant sensiblement un même diamètre que celui des fibres; en effet, eu égard à la section des fibres analogue à celle d'un cheveu, l'introduction des fibres exige soit une acuité visuelle de l'opérateur peu ordinaire, soit un moyen de grossissement optique, tel qu'un microscope binoculaire stéréoscopique, de préférence associé à un micromanipulateur.

Un autre répartiteur formant un embout allongé composite, dit "élément de raccordement", d'un câble à fibres optiques est décrit dans la demande de brevet européen EP-A-0 008 980. Cet élément de raccordement atténue le second inconvénient précité mais présente cependant le premier inconvénient précité. En effet, l'élément de raccordement comporte un élément intermédiaire, dit guide répartiteur, logé entre une embase et un couvercle fixés l'un à l'autre. L'élément intermédiaire forme deux ouvertures symétriques dites canaux de répartition respectivement avec l'embase et le couvercle, s'étendant longitudinalement suivant l'axe du câble et propres à recevoir des extrémités des deux moitiés des fibres sortant du câble pour les répartir en deux nappes distinctes. Chacun des canaux de répartition comporte une première extrémité arrière large, ayant une section transversale en demi-cercle sensiblement égale à la moitié de celle du câble, à travers laquelle sont introduites en vrac les extrémités de la moitié correspondante des fibres. A une seconde extrémité du canal de répartition à partir de laquelle sortent les extrémités de fibres disposées parallèlement en nappe, le canal de répartition offre des canaux individuels longitudinaux recevant chacun une fibre et circonscrits dans un rectangle ayant une hauteur sensiblement égale au diamètre des fibres. Entre les deux extrémités, le canal de répartition s'aplatit progressivement pour juxtaposer coplanairement les fibres dans une section rectangulaire ayant une hauteur égale au diamètre des fibres et une largeur égale au produit de ce diamètre par le nombre de fibres, puis des nervures de séparation s'élèvent en hauteur pour séparer progressivement les fibres en direction de la seconde extrémité.

Conjointement au premier inconvénient précité, le répartiteur selon la EP-A-0 008 980 est relativement long ce qui accroît l'encombrement du boîtier de raccordement de câbles. En outre, il est difficile de repérer visiblement chaque fibre optique entre les extrémités du répartiteur, c'est-à-dire d'assigner directement une fibre optique sortant du câble à un canal individuel au niveau de la seconde extrémité du répartiteur. En effet, d'une part, les canaux individuels ne sont pas visibles à la première extrémité et, d'autre part, les fibres sont introduites sans précautions particulières, pratiquement en vrac, à la première extrémité du répartiteur. En général, un tel repérage est requis pour abouter les fibres de deux câbles notamment lorsque les fibres convoient des signaux spécifiques différents.

L'invention a pour but d'obvier aux inconvénients évoqués ci-dessus selon la technique antérieure et, plus particulièrement, de fournir un répartiteur permettant de préparer en nappe des extrémités de fibres optiques sortant d'une structure à symétrie axiale, en vue de maintenir en nappe les fibres dans un boîtier de raccordement sans insertion du répartiteur lui-même dans le boîtier, l'utilisation du répartiteur n'exigeant aucune adresse et compétence particulière de l'opérateur.

A cette fin, l'invention a pour objet un dispositif de préparation en nappe des extrémités de fibres optiques comprenant un répartiteur, tel que défini dans la revendication 1.

Le répartiteur constitutif du dispositif de préparation selon l'invention peut être utilisé seul, en introduisant les fibres sortant de la structure une à une à travers les ouvertures sans précaution particulière, sauf à repérer leurs positions relatives en vue de leur raccordement à des fibres d'un autre câble, les ouvertures ayant en pratique une section transversale très grande par rapport à la section des fibres optiques. Puis les fibres peuvent être poussées dans le fond des canaux qui ont une largeur sensiblement égale au diamètre des fibres optiques. Le maintien en nappe des fibres peut être obtenu au moyen d'une paire de barrette ou de rubans adhésifs ou par une petite nappe de colle à proximité du répartiteur, entre celui-ci et l'extrémité de la structure d'où sortent les fibres. Une telle opéraiton peut être répétée en éloignant le répartiteur de l'extrémité de la structure afin de peigner les fibres et d'étaler coplanairement les fibres sur une grande longueur. Après obtention de la nappe, le répartiteur est définitivement retiré et la nappe peut être introduite dans un boîtier de raccordement. Ainsi un même repartiteur sert à préparer en nappe successivement plusieurs faisceaux de fibres sortant de câbles à raccorder.

En pratique, le répartiteur a la forme d'un disque mince dans lequel les ouvertures sont équiréparties circulairement et ont une section transversale en forme de section circulaire.

Cependant, afin d'obtenir avec une grande précision un parallèlisme et une coplanarité des extrémités des fibres, le dispositif de préparation selon l'invention comprend des moyens mobiles par rapport au répartiteur pour pousser les fibres à partir des ouvertures vers les fonds des canaux respectifs. De préférence les moyens pour pousser sont conformes aux revendications 7 à 10.

Une nappe de fibres sur une grande longueur peut être obtenue mécaniquement grâce à des moyens pour maintenir tels que définis dans les revendications 11 à 14. En particulier, l'invention prévoit un peigne qui vient soutenir les fibres devant le répartiteur. Le déplacement relatif du peigne par rapport au répartiteur permet de peigner les fibres parallèlement sur un plan. Après quoi, les fibres entre le peigne et le répartiteur peuvent être appliquées sur un support plan adéquat ou sont rendues solidaires par des rubans adhésifs ou de la colle.

Deux répartiteurs parallèles et superposables, encadrant les moyens pour pousser, facilitent un glissement transversal à frottement doux des fibres, à partir des ouvertures vers les canaux.

D'autres avantages de la présente invention apparaîtront plus clairement à la lecture de la description qui suit d'un mode de réalisation préféré du dispositif en référence aux dessins annexés correspondants, dans lesquels:

- la Fig. 1 est une vue en coupe d'un câble à fibres optiques connu à jonc cylindrique rainure;
- la Fig. 2 est une vue en perspective schématique d'un support plan pour le raccordement de deux câbles cylindriques à fibres optiques;
- la Fig. 3 montre les courbures en cloche conférées aux extrémités des fibres optiques d'un câble à raccorder;
- la Fig. 4 est une vue de côté schématique le long de l'axe longitudinal ZZ' du dispositif de préparation, lors de l'introduction des fibres à travers les ouvertures de répartiteur;
- la Fig. 5 est une vue de face d'un répartiteur;
- la Fig. 6 est une vue de face détaillée, à plus grande échelle que la Fig. 5, montrant la répartition des canaux le long de l'axe transversal XX';
- la Fig. 7 est une vue en coupe de face du dispositif de préparation montrant les moyens pour pousser les fibres dans les canaux de répartiteur;
- la Fig. 8 est une vue montrant le coulissement du peigne venant au contact des fibres;
- la Fig. 9 est une vue de face du peigne et du levier rabattant associé;
- la Fig. 10 est une vue de côté analogue à la Fig. 4, après retrait de la bague pour l'épanouissement des fibres;
- la Fig. 11 est une vue schématique de face montrant la superposition des fentes des coulisseaux et des fonds des canaux lors de l'alignement des fibres;
- la Fig. 12 est une vue analogue à la Fig. 8 après déplacement relatif du peigne et du bâti de répartiteur; et
- les Figs. 13 et 14 montrent schématiquement la liaison des fibres par barrettes adhésives ou par collage après peignage selon la Fig. 12.

Pour une meilleure compréhension de l'invention sont décrites en premier lieu les positions initiales et finales des extrémités des fibres optiques d'un câble cylindrique dont le passage de l'une vers l'autre est obtenu au moyen du dispositif de préparation selon l'invention.

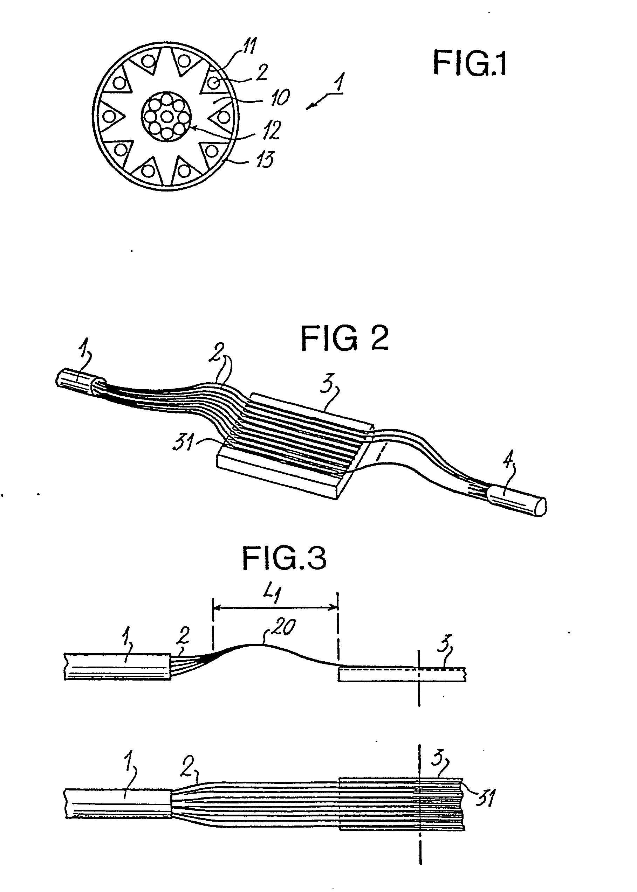

Le câble 1 est supposé comprendre dix fibres optiques 2 qui sont équiréparties à la périphérie rainurée d'une structure à symétrie axiale telle qu'un jonc cylindrique 10. Chaque rainure 11 est généralement hélicoïdale et contient une fibre optique 2, comme illustré à la Fig. 1, ou plusieurs selon le type de câble utilisé. Le câble comprend classiquement au centre du jonc 10 un élément porteur de fils d'acier 12 et à sa périphérie une gaine 13 généralement composite dont l'enveloppe externe est composée d'un enrubannage. L'invention s'applique également à d'autres câbles à symétrie axiale, tels que ceux dans lesquels les fibres optiques sont logées dans des gaines individuelles torsadées dans la gaine composite.

Le dispositif de raccordement comprend notamment un support plat 3, dans l'une des grandes faces planes duquel sont ménagées des rainures rectilignes 31, généralement à section en vé, comme montré à la Fig. 2. Les rainures 31 sont longitudinales, parallèles, équidistantes et coplanaires. En position finale après dégainage du câble, les extrémités des fibres 2 sont plaquées au fond de rainures respectives 31 et y sont maintenues, par exemple par collage, dans la première moitié du support 3. L'autre moitié reçoit les extrémités des fibres optiques de l'autre câble 4 à raccorder. Le dispositif de raccordement comprend des moyens convenables pour supporter le support 3, pour le partager en deux moitiés, pour araser ses moitiés et les extrémités des fibres et pour les réunir en vue d'abouter deux à deux les fibres des câbles 3 et 4.

On notera, en référence à la Fig. 3, que les fibres optiques sortant épanouies des rainures 11 du jonc scié 10 peuvent être courbées en forme de cloche 20 entre l'extrémité du jonc et leurs extrémités coplanaires sur une longueur $L_1$ qui précède la moitié du support 3. Ces courbures en cloche sont destinées à absorber les dilatations différentielles d'éléments constitutifs du dispositif de raccordement.

Le dispositif de préparation, objet de l'invention, permet ainsi de positionner les fibres optiques, initialement réparties autour d'un cylindre, en une nappe, d'équirépartir coplanairement les extrémités des fibres, de repérer les diiférentes fibres et également, si nécessaire, de courber les fibres en forme de cloche.

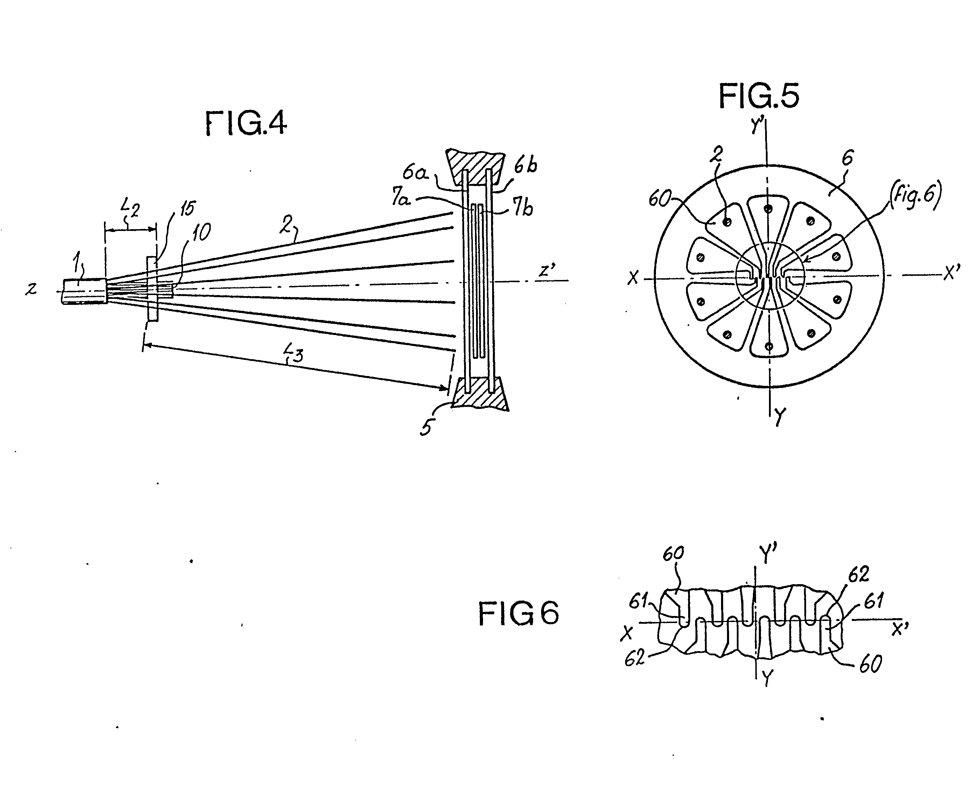

Le dispositif de préparation est représenté schématiquement à la Fig. 4. Un répartiteur 6a ou, de préférence, deux répartiteurs identiques superposables et parallèles 6a, 6b sont fixés sur un bâti 5 mobile sur le socle du dispositif.

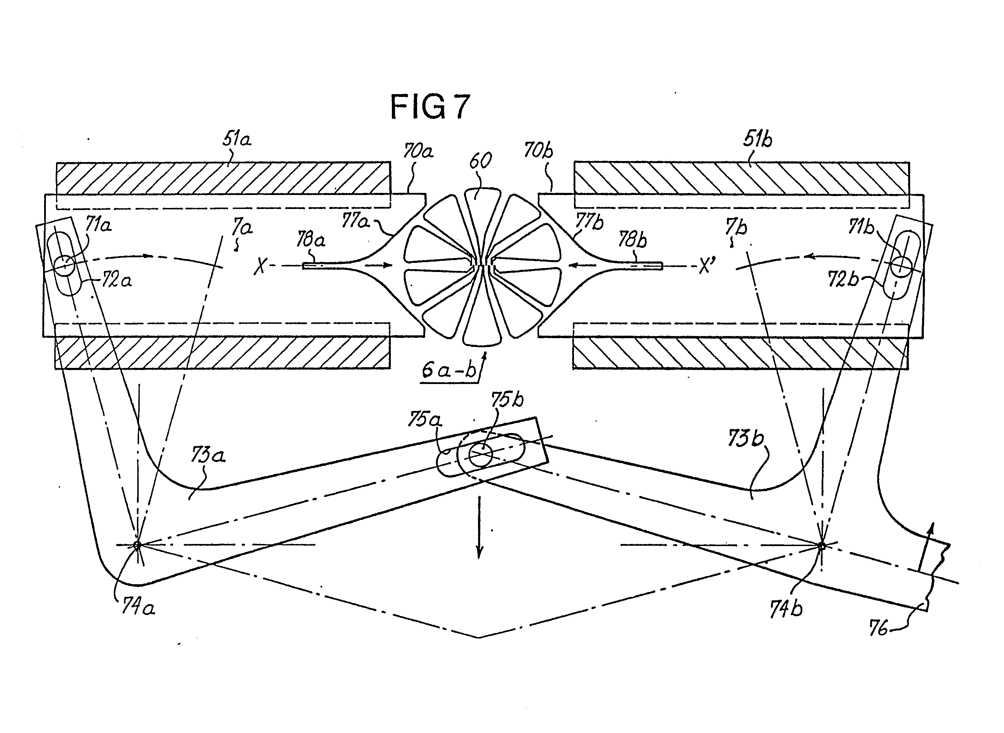

Comme montré à la Fig. 5, chaque répartiteur 6 est un disque mince dans lequel ont été découpées des ouvertures 60 en nombre égal ou supérieur à celui des fibres optiques 2 du câble à raccorder 1. Chaque ouverture est destinée à être traversée par une fibre optique. Les ouvertures 60 sont en forme de secteurs circulaires 60 et sont équiréparties autour du centre du répartiteur. Les extrémités effilées des secteurs 60 sont prolongées par des canaux borgnes respectifs 61 qui sont perpendiculaires à l'axe diamétral horizontal XX' du répartiteur. Chaque canal a une largeur sensiblement supérieure au diamètre d'une fibre optique 2 et peut être obtenu par exemple par usinage au rayon laser. Ces canaux 61 sont montrés en détail à la Fig. 6. Le fond 62 de chaque canal 61 est de l'autre côté de l'axe XX' par rapport au secteur respectif 60 qu'il prolonge. Tous les fonds des canaux d'un même côté de l'axe XX' sont alignés parallèlement à l'axe XX' et sont à une distance de celui-ci sensiblement égal au rayon d'une fibre optique. Les canaux 61 issus de deux secteurs 60 symétriques par rapport à l'axe XX' sont adjacents et l'écart entre deux canaux adjacents est égal à celui entre deux rainures 31 de support 3. Il résulte de ces dispositions que lorsque des fibres sont poussées au fond des canaux 61, leurs axes sont alignés sur l'axe XX'. Plus précisément, les fibres sont coplanaires entre les canaux deux à deux parallèles des répartiteurs 6a et 6b. Le dispositif de préparation comprend également des moyens pour pousser les fibres à partir des ouvertures 60 vers les fonds 62 des canaux respectifs 61. Ces moyens sont montrés aux Figs. 4 et 7 et consistant principalement en deux coulisseaux identiques 7a, 7b qui peuvent être translatés simultanément l'un vers l'autre parallèlement à l'axe XX' et aux faces des répartiteurs 6a, 6b et entre ceux-ci au moyen d'un système de leviers.

Chaque coulisseau 7a, 7b est issu d'une plaque rectangulaire dont les grands chants 70a, 70b coulissent dans deux glissières 51a, 51b qui sont pratiquées dans le bâti 5 parallèlement à l'axe XX'. Les extrémités éloignées des deux coulisseaux 7a, 7b comprennent deux tétons 71a, 71b logés dans des lumières oblongues 72a, 72b de bras de deux leviers 73a, 73b en forme d'équerre. Les leviers 73a, 73b ont leurs sommets 74a, 74b qui sont montés à rotation dans le bâti 5 et qui sont symétriques par rapport au plan diamétral des répartiteurs 6a, 6b perpendiculaire à l'axe XX'. Les extrémités des autres bras des leviers 73b, 73a, comprennent respectivement un téton 75b et une lumière oblongue 75a coopérants. L'un des leviers, tel que 73b, tourne et entraîne en rotation inverse l'autre levier 73a sous l'action exercée en 76 par une poignée ou par la tige d'un organe électromécanique connu tel qu'un vérin ou un électro-aimant. Comme on le voit à la Fig. 4, les plans de glissement des coulisseaux 7a et 7b sont parallèles et à faible distance afin que les extrémités en regard des coulisseaux puissent se chevaucher.

Les extrémités 77a, 77b des coulisseaux 7a, 7b en regard de l'axe XX' sont profilées en encoche en forme de vé rentrant. Le sommet de chaque encoche 77a, 77b est prolongé par une fente rectiligne 78a, 78b. Les fentes 78a, 78b ont leurs axes longitudinaux coplanaires et parallèles à l'axe XX'. La longueur d'une fente est au moins égale à la distance des canaux extrêmes 61 des répartiteurs. La largeur d'une fente est sensiblement égale ou supérieure au diamètre des fibres optiques 2.

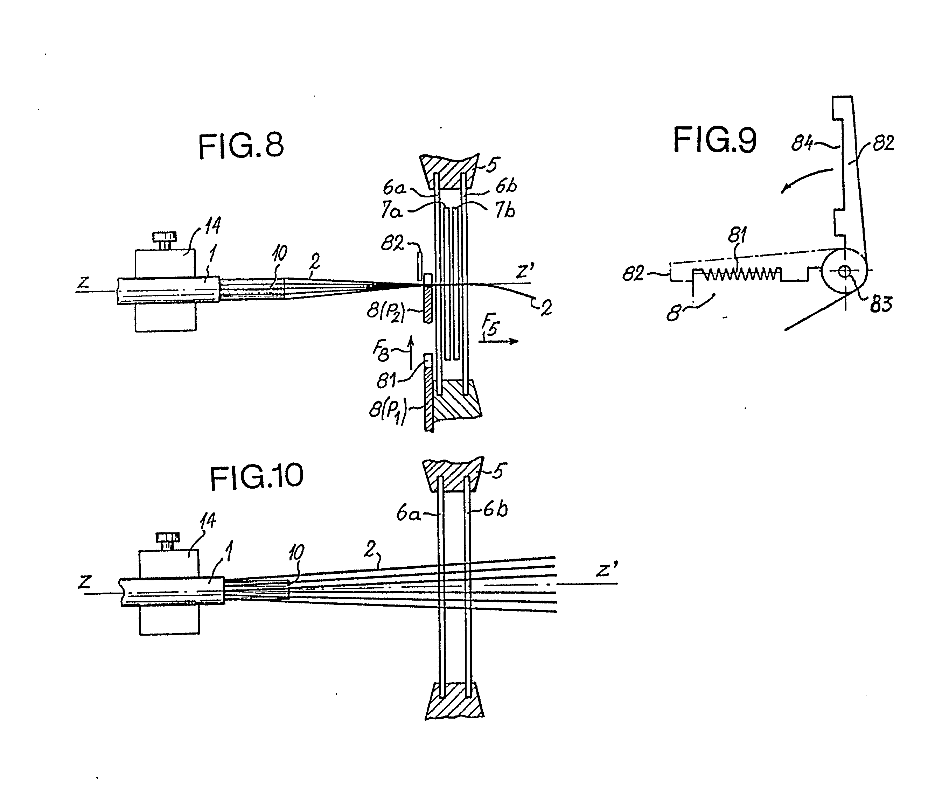

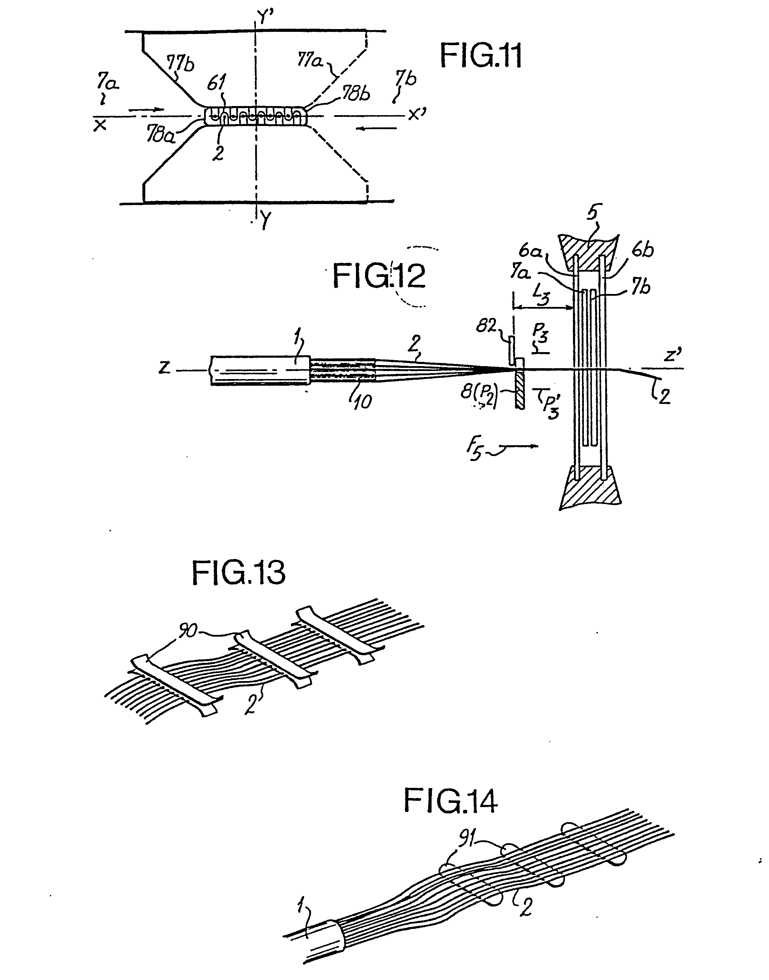

Le dispositif de préparation comprend, comme montré aux Figs. 8 et 9, des moyens pour maintenir coplanairement et parallèlement les fibres lors de l'opération de peignage sur une grande longueur, comme on le verra dans la suite. Ces moyens consistent en un peigne 8 qui peut coulisser perpendiculairement à l'axe XX' dans une glissière verticale fixée au socle du dispositif, par exemple au moyen d'une crémaillère. L'extrémité supérieure du peigne 8 présente des encoches 81 en vé dont la répartition est identique à celles des rainures 31 du support 3 et des canaux 61 des répartiteurs 6a, 6b. Au peigne est adjoint un levier 82 qui est articulé en 83 latéralement sur le peigne, autour d'un axe perpendiculaire aux faces des répartiteurs. Lorsque les fonds des encoches 81 du peigne viennent sensiblement en alignement avec les fonds 62 des canaux inférieurs 61 (Fig. 6) des répartiteurs après montée du peigne suivant la flèche F₈ (Fig. 8 et 9), le levier 82 est abaissé à l'horizontale afin d'appliquer les fibres dans les encoches 81 et de les maintenir. Le chant 84 du levier 82 au contact des fibres peut être rectiligne, comme illustré, ou à denture symétrique de celle 81 du peigne lorsque le chant 84 et la denture 81 sont le long de l'axe central commun ZZ' des répartiteurs, ou peut être à denture complémentaire de celle 81 du peigne lorsque le chant 84 est appliqué au-dessus de la denture 81.

Le dispositif de préparation comporte également des moyens de translation relative du bâti 5 par rapport au peigne 8 suivant la direction de l'axe ZZ'. Ces moyens - non représentés - consistent en deux systèmes indépendants à crémaillère et pignon entraînant un chariot guidé sur le socle du dispositif et translatant respectivement le bâti 5 et le peigne 8 le long de l'axe ZZ'.

On décrit maintenant la préparation des extrémités des fibres du câble à raccorder.

Le câble est encastré dans un étau adéquat 14, puis dégainé sur une longueur L₂ + L₃, comme montré à la Fig. 4. Les fibres 2 sont dégagées des rainures 11 du jonc 10. Le jonc 10 et l'élément porteur 12 sont coupés à une longueur L₂ de l'extrémité de la gaine 13. Une bague 15 est glissée autour du jonc 10. Cette bague présente des rainures périphérique similaires aux rainures 11 du jonc mais équiréparties sur un cercle de diamètre plus grand. Les rainures de la bague 15 sont de préférence le long de génératrices équiréparties d'un tronc de cône convergeant vers le câble. Les fibres sont ensuite épanouies coniquement en les appliquant par leurs propres flexions dans les rainures de la bague 15, comme montré à la Fig. 4.

L'extrémité du câble ainsi préparée permet de repérer les fibres par un numérotage des secteurs 60 des répartiteurs 6a et 6b et de les introduire dans ces secteurs, à raison d'une fibre optique par secteur, comme montré à la Fig. 5.

La bague 15 est enlevée et les fibres 2, une fois libérées, se rapprochent de l'axe central ZZ' des répartiteurs par leurs flexions propres, comme montré approximativement à la Fig. 10.

Le système à leviers 73a et 73b est déplacé en 76 (Fig. 7) afin que les fentes 78a et 78b des coulisseaux 7a et 7b se chevauchent et soient encadrées par les canaux 61 des répartiteurs, comme montré à la Fig. 11. Lors des translations en sens opposé des coulisseaux 7a et 7b, les côtés des encoches en vé rentrant 77a et 77b poussent les extrémités des fibres optiques 2 dans les canaux 61 des répartiteurs 6a et 6b pour finalement les regrouper dans les canaux 61 le long de l'axe XX'.

A ce stade, les fibres optiques sont coplanaires et sont emprisonnées dans les fonds 62 des canaux 61 d'une part, et dans les fentes 78a, 78b des coulisseaux 7a, 7b d'autre part, à des positions qui correspondent exactement à celles sur le support plat 3 (Fig. 2).

Le peigne 8 est initialement en retrait P₁ de l'axe XX' et à proximité immédiate du répartiteur 6a qui est face au jonc 10. Le peigne coulisse vers le haut jusqu'à ce que les fonds de ses encoches 81 atteignent en P₂ les fibres optiques, comme montré aux Figs. 8 et 9. Les dents du peigne viennent se placer entre les fibres, lesquelles sont emprisonnées dans les fonds des encoches respectives 81 par le rabattement horizontal du levier 82 et son verrouillage sur le peigne 8.

Puis les fibres sont peignées à partir du peigne 8, en translatant le long de l'axe ZZ', vers les extrémités des fibres suivant la flèche F₅, le bâti 5 à répartiteurs 6a, 6b par les moyens de translation respectifs non représentés, déjà mentionnés. Les fibres 2 sont ainsi maintenues parallèlement, à égale distance et coplanairement sur une longueur L₃ séparant le peigne 8 du répartiteur 6a, comme montré à la Fig. 12.

Le peigne 8 et le levier rabattu 82 sont encore montés au-dessus de l'axe XX' à la position P₃ montrée à la Fig. 12 - ou descendus à une position inférieure symétrique P'₃ - afin que les fibres 2 entre le câble 1 et le répartiteur 6a épousent des courbes en cloches 20 (Fig. 3). On notera que les fibres 2 sont pratiquement enserrées entre le peigne 8 et le levier 82 tandis qu'elles peuvent glisser à frottement doux dans les canaux 61 des répartiteurs 6a, 6b et les fentes 78a, 78b des coulisseaux 7a, 7b.

Après l'étape précédente de peignage et courbement des fibres, on procède au maintien en nappe des positions relatives des fibres ainsi obtenues entre le jonc coupé 10 et le répartiteur 6a. Ce maintien peut être réalisé au moyen de paires de barrettes ou rubans adhésifs 90 contrecollés, emprisonnant les fibres optiques, comme montré à la Fig. 13. Il peut être également réalisé par enrobage de résine à haute viscosité et à polymération rapide répartie en nappes 91, comme montré à la Fig. 14.

Finalement, les fibres ainsi solidaires en nappe sont sorties du dispositif de préparation par levage du levier 82, descente du peigne 8, retraits par glissements opposés des coulisseaux 7a et 7b et coulissement du bâti 5 à répartiteur en direction opposée au câble ou traction de la nappe. La nappe de fibres 2 est propre à son positionnement dans le dispositif de raccordement.

## Revendications

1 - Dispositif de préparation en nappe des extrémités de fibres optiques (2) réparties autour d'une structure à symétrie axiale (10), caractérisé en ce qu'il comprend un répartiteur monobloc (6a) constitué par une plaque mince destinée à être disposée sensiblement transversalement à ladite structure, plaque mince au travers de laquelle sont percées des ouvertures (60) propres à être traversées chacune par une extrémité de fibre (2) sortant de ladite structure, chacune desdites ouvertures (60) se prolongeant latéralement par un canal (61) qui est également percé au travers de ladite plaque et qui s'étend dans cette plaque depuis son ouverture (60) correspondante jusqu'à se terminer par une extrémité borgne formant fonds (62), lesdits canaux (61) étant agencés pour s'étendre de façon telle que leursdits fonds (62) sont situés au-delà d'un axe d'alignement (X X') des extrémités de fibres dans la plaque, à une distance de cet axe sensiblement égale au rayon des fibres optiques (2), de sorte que lesdites extrémités de fibres (2) sortant de ladite structure (10) sont ainsi susceptibles d'être étalées en nappe le long dudit axe d'alignement (X X'), en les faisant passer librement au travers desdites ouvertures (60), puis en les poussant transversalement à cette structure (10) à partir des ouvertures (60) jusqu'auxdits fonds (62) desdits canaux (61).

2 - Dispositif conforme à la revendication 1, caractérisé en ce que les canaux (61) ont une largeur sensiblement égale au diamètre des fibres optiques (2), tandis que les ouvertures (60) ont une section transversale nettement plus grande que la section des fibres optiques (2).

3 - Dispositif conforme à la revendication 1 ou 2, caractérisé en ce que les ouvertures (60) sont équiréparties circulairement.

4 - Dispositif conforme à la revendication 3, caractérisé en ce que le répartiteur est un disque mince (6a) et les ouvertures (60) ont une section transversale en forme de secteur circulaire.

5 - Dispositif conforme à l'une des revendications 1 à 4, caractérisé en ce que deux canaux (61) prolongeant des ouvertures (60) symétriques par rapport audit axe (XX') sont adjacents.

6 - Dispositif conforme à l'une des revendications 1 à 5, caractérisé en ce qu'il comprend des moyens (7) mobiles par rapport du répartiteur (60) pour pousser les fibres à partir des ouvertures (60) vers les fonds (62) des canaux respectifs (61).

7 - Dispositif conforme à la revendication 6, caractérisé en ce que les moyens pour pousser les fibres comprennent deux coulisseaux (7a, 7b) parallèles au répartiteur (6a), ayant des chants en regard à section en vé rentrant (77a, 77b) dont les sommets sont prolongés par des fentes (78a, 78b) ayant leurs axes longitudinaux parallèles et coplanaires audit axe (XX'), et des moyens (73) pour déplacer lesdits coulisseaux en sens opposé parallèlement audit axe (XX').

8 - Dispositif conforme à la revendication 7, caractérisé en ce que les fentes (78a, 78b) ont une largeur sensiblement égale au diamètre des fibres (2).

9 - Dispositif conforme à la revendication 7 ou 8, caractérisé en ce que les moyens pour déplacer les coulisseaux comprennent deux leviers (73a, 73b) ayant chacun une extrémité (72a, 72b) coopérant avec l'un des coulisseaux (7a, 7b) et l'autre extrémité (75a, 75b) coopérant avec ladite autre extrémité (75b, 75a) de l'autre levier.

10 - Dispositif conforme à l'une des revendications 6 à 9, caractérisé en ce qu'il comprend un bâti (5) dans lequel sont logés le répartiteur (6a) et les moyens pour pousser les fibres (7).

11 - Dispositif conforme à l'une des revendications 1 à 10, caractérisé en ce qu'il comprend des moyens amovibles (8) déposés entre ladite structure (10) et le répartiteur (6a) pour maintenir coplanairement et parallèlement les fibres (2) à proximité du répartiteur (6a) après poussée des extrémités des fibres (2) dans les fonds (62) des canaux (61).

12 - Dispositif conforme à la revendication 11, caractérisé en ce que les moyens pour maintenir les fibres comprennent un peigne amovible (8) dont la répartition des encoches (81) est semblable à celle desdits canaux (61) et parallèle audit axe (XX'), et des moyens pour déplacer le peigne (8) perpendiculairement et parallèlement aux fibres (2).

13 - Dispositif conforme à la revendication 12, caractérisé en ce qu'il comprend des moyens (82) reliés au peigne (8) pour appliquer les fibres (2) dans le fond des encoches (81) du peigne (8).

14 - Dispositif conforme à la revendication 10 et à l'une des revendications 11 à 13, caractérisé en ce qu'il comprend des moyens pour déplacer relativement le bâti (5) et les moyens pour maintenir les fibres (8) longitudinalement aux fibres (2).

15 - Dispositif conforme à l'une des revendications 1 à 14, caractérisé en ce qu'il comprend un second répartiteur (6b) parallèle et superposable à l'autre répartiteur (6a).

16 - Dispositif conforme aux revendications 6 et 15, caractérisé en ce que les moyens pour pousser les fibres (7) sont encadrés par les deux répartiteurs (6a, 6b).


**Patentansprüche**

1. Vorrichtung zur Anordnung der Enden von Lichtleitfasern (2), die um einen achsensymmetrischen Körper (10) herum angeordnet sind, in einer Fläche, dadurch gekennzeichnet, daß sie eine Klemmenblockkonstruktion (6a) umfaßt, die durch eine dünne Platte gebildet ist, die dazu bestimmt ist, im wesentlichen quer zu dem Körper angeordnet zu werden, wobei durch die dünne Platte Öffnungen (60) durchgebohrt sind, die jeweils für die Durchführung eines Endes einer von dem Körper ausgehenden Faser (2) geeignet sind, wobei sich die Öffnungen (60) jeweils seitlich mittels eines Kanals (61) fortsetzen, der ebenso durch die Platte durchgebohrt ist und der sich in die Platte von deren entsprechender Öffnung (60) erstreckt, bis er mittels eines einen Boden (62) bildende Blindendes endet, wobei die Kanäle (61) angeordnet sind, um sich derart zu erstrecken, daß ihre Böden (62) jenseits einer Ausrichtungsachse (X X') der Enden der Fasern in der Platte in einem Abstand von der Achse liegen, der im wesentlichen gleich dem Radius der Lichtleitfasern (2) ist, so daß die von dem Körper (10) ausgehenden Enden der Fasern (2) auf diese Weise in einer Fläche längs der Ausrichtungsachse (X X') verlegbar sind, indem veranlaßt wird, daß sie frei durch die Öffnungen (60) durchgehen, sie dann quer zu dem Körper (10) ausgehend von den Öffnungen (60) bis zu den Böden (62) der Kanäle (61) geschoben werden.

2. Vorrichtung nach Anspruch 1, dadurch gekennzeichnet, daß die Kanäle (61) eine Breite haben, die im wesentlichen gleich dem Durchmesser der Lichtleitfasern (2) ist, während die Öffnungen (60) einen Querschnitt haben, der deutlich größer als der Querschnitt der Lichtleitfasern (2) ist.

3. Vorrichtung nach Anspruch 1 oder 2, dadurch gekennzeichnet, daß die Öffnungen (60) im Kreise gleich verteilt sind.

4. Vorrichtung nach Anspruch 3, dadurch gekennzeichnet, daß der Klemmenblock eine dünne Scheibe (6a) ist und die Öffnungen (60) einen kreissektorförmigen Querschnitt besitzen.

5. Vorrichtung nach einem der Ansprüche 1 bis 4, dadurch gekennzeichnet, daß zwei Kanäle (61) benachbart sind, die in bezug auf die Achse (XX') symmetrische Öffnungen (60) verlängern.

6. Vorrichtung nach einem der Ansprüche 1 bis 5, dadurch gekennzeichnet, daß sie in bezug auf den Klemmenblock (6a) bewegliche Mittel (7) umfaßt, um die Fasern von den Öffnungen (60) zu den Böden (62) der entsprechenden Kanäle (61) zu schieben.

7. Vorrichtung nach Anspruch 6, dadurch gekennzeichnet, daß die Mittel zum Schieben der Fasern zwei zum Klemmenblock (6a) parallele Schieber (7a, 7b), die gegenüber Kanten (77a, 77b) mit einspringendem V-förmigen Querschnitt besitzen, deren Spitzen durch Schlitze (78a, 78b) mit zur Achse (XX') parallelen und koplanaren Längsachsen verlängert sind, und Mittel (73) umfassen, um die Schieber in entgegengesetzter Richtung parallel zur Achse (XX') zu verstellen.

8. Vorrichtung nach Anspruch 7, dadurch gekennzeichnet, daß die Schlitze (78a, 78b) eine Breite haben, die im wesentlichen gleich dem Durchmesser der Fasern (2) ist.

9. Vorrichtung nach Anspruch 7 oder 8, dadurch gekennzeichnet, daß die Mittel zum Verstellen der Schieber zwei Hebel (73a, 73b) umfassen, die jeweils ein mit einem der Schieber (7a, 7b) zusammenwirkendes Ende (72a, 72b) besitzen, und wobei das andere Ende (75a, 75b) mit dem anderen Ende (75b, 75a) des anderen Hebels zusammenwirkt.

10. Vorrichtung nach einem der Ansprüche 6 bis 9, dadurch gekennzeichnet, daß sie ein Rahmengestell (5) umfaßt, in dem der Klemmenblock (6a) und die Mittel zum Schieben der Fasern (7) untergebracht sind.

11. Vorrichtung nach einem der Ansprüche 1 bis 10, dadurch gekennzeichnet, daß sie zwischen dem Körper (10) und dem Klemmenblock (6a) angeordnete bewegliche Mittel (8) umfaßt, um die Fasern (2) koplanar und parallel in der Nähe des Klemmenblocks (6a) nach Schub der Enden der Fasern (2) in die Böden (62) der Kanäle (61) zu halten.

12. Vorrichtung nach Anspruch 11, dadurch gekennzeichnet, daß die Mittel zum Halten der Fasern einen beweglichen Kamm (8), bei dem die Verteilung der Einschnitte (81) derjenigen der Kanäle (61) gleicht und zur Achse (XX') parallel ist, und Mittel zum Verstellen des Kamms (8) senkrecht und parallel zu den Fasern (2) umfassen.

13. Vorrichtung nach Anspruch 12, dadurch gekennzeichnet, daß sie mit dem Kamm (8) verbundene Mittel (82) umfaßt, um die Fasern (2) in den Boden der Einschnitte (81) des Kamms (8) zu bringen.

14. Vorrichtung nach Anspruch 10 und einem der Ansprüche 11 bis 13, dadurch gekennzeichnet, daß sie Mittel zur Relativverstellung des Rahmengestells (5) und die Mittel zum Halten der Fasern (8) in Längsrichtung zu den Fasern (2) umfaßt.

15. Vorrichtung nach einem der Ansprüche 1 bis 14, dadurch gekennzeichnet, daß sie einen zweiten Klemmenblock (6b) umfaßt, der zum anderen Klemmenblock (6a) parallel und über diesem anordenbar ist.

16. Vorrichtung nach einem der Ansprüche 6 und 15, dadurch gekennzeichnet, daß die Mittel zum Schieben der Fasern (7) von den beiden Klemmenblöcken (6a, 6b) umschlossen sind.

**Claims**

1 - A device for arraying ends of optical fiber (2) spaced out around an axially symmetrical structure (10), characterized in that it comprises a monobloc dividing member (6a) constituted by a thin plate intended to be substantially set transversal to said structure, through the thin plate being bored openings (60) adapted each to be crossed by a fiber end (2) outgoing from said structure, each of said openings (60) going on laterally in a channel (61) which is too bored through said plate and that extends in this plate from its corresponding opening (60) until it ends in a dead-end forming bottom (62), said channels (61) being arranged for extending in such a way that their said bottoms (62) are located beyond an alignment-axis (XX') of the fiber ends in the plate, at a distance from this axis substantially equal to the radius of optical fiber (2), so that said ends of fibers (2) outgoing from said structure (10) are thus susceptible of being arrayed along said alignment-axis (XX') by freely driving them through said openings (60), and then by pushing them transversely to this structure (10) from the openings (60) into said bottoms (62) of said channels (61).

2 - Device according to claim 1, characterized in that the channels (61) have a width substantially equal to the diameter of the optical fibers (2), whereas the openings (60) have a cross-section distinctly greater than the section of the optical fibers (2).

3 - Device according to claim 1 or 2, characterized in that the openings (60) are equally spaced out circularly.

4 - Device according to claim 3, characterized in that the dividing member is a thin disc (6a) and the openings (60) have a cross section in the form of a circular sector.

5 - Device according to one of claims 1 to 4, characterized in that two channels (61) extended by opposite openings (60) with respect to said axis (XX') are adjacent.

6 - Device according to one of claims 1 to 5, characterized in that it comprises means (7) movable with respect to the dividing member (6a) for pushing the fibers from the openings (60) into the bottoms (62) of the respective channels (61).

7 - Device according to claim 6, characterized in that the fiber pushing means comprises two sliding members (7a, 7b) parallel to the dividing member (6a), having opposite re-entrant V-shaped edges (77a, 77b) whose apices are extended by slits (78a, 78b) having their longitudinal axes parallel and coplanar with said axis (XX'), and means (73) for moving said sliding members in opposite directions parallel to said axis (XX').

8 - Device according to claim 7, characterized in that the slits (78a, 78b) have a width substantially equal to the diameter of the fibers (2).

9 - Device according to claim 7 or 8, characterized in that the sliding member moving means comprises two levers (73a, 73b) each having one end (72a, 72b) cooperating with one of the sliding members (7a, 7b) and the other end (75a, 75b) cooperating with said other end (75a, 75b) of the other lever.

10 - Device according to one of claims 6 to 9, characterized in that it comprises a frame (5) in which the dividing member (6a) and the fiber pushing means (7) are lodged.

11 - Device according to one of claims 1 to 10, characterized in that it comprises removable means (8) arranged between said structure (10) and the dividing member (6a) for holding the optical fibers (2) in the proximity of the dividing member (6a) in a coplanar and parallel fashion after the fiber (2) ends being pushed into the bottoms (62) of the channels (61).

12 - Device according to claim 11, characterized in that the fiber holding means comprises a removable comb (8) whose distribution of the notches (81) is similar to that of said channels (61) and parallel to said axis (XX'), and means for moving the comb (8) perpendicularly and parallelly to the fibers (2).

13 - Device according to claim 12, characterized in that it comprises means (82) connected to the comb (8) for laying the fibers (2) in the bottom of the notches (81) of the comb (8).

14 - Device according to claim 10 and to one of claims 11 to 13, characterized in that it comprises means for relatively moving the frame (5) and the fiber holding means (8) longitudinally to the fibers (2).

15 - Device according to one of claims 1 to 14, characterized in that it comprises a second dividing member (6b) parallel and superposable on the other dividing element (6a).

16 - Device according to claims 6 and 15, characterized in that the fiber pushing means (7) are lodged between the two dividing members (6a, 6b).

FIG.1

FIG 2

FIG.3

# FIG.4

# FIG.5

# FIG 6

# FIG 7

0 078 196

FIG.8

FIG.9

FIG.10

FIG.11

FIG.12

FIG.13

FIG.14